(19) Europäisches Patentamt
European Patent Office
Office européen des brevets

(11) **EP 3 118 972 B1**

(12) **EUROPEAN PATENT SPECIFICATION**

(45) Date of publication and mention
of the grant of the patent:
**22.04.2020 Bulletin 2020/17**

(51) Int Cl.:
*H02K 1/22* *(2006.01)*          *F16H 49/00* *(2006.01)*
*H02K 16/02* *(2006.01)*

(21) Application number: **15762419.8**

(22) Date of filing: **11.03.2015**

(86) International application number:
**PCT/JP2015/057137**

(87) International publication number:
**WO 2015/137392 (17.09.2015 Gazette 2015/37)**

(54) **ANNULAR MAGNETIC POLE MEMBER AND MAGNETIC WAVE GEAR DEVICE**

RINGFÖRMIGES MAGNETELEMENT UND MAGNETISCHE WELLENGETRIEBEVORRICHTUNG

ÉLÉMENT PÔLE MAGNÉTIQUE ANNULAIRE, ET DISPOSITIF D'ENGRENAGE À ONDE MAGNÉTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.03.2014 JP 2014049460**

(43) Date of publication of application:
**18.01.2017 Bulletin 2017/03**

(73) Proprietors:
• **IHI Corporation**
**Tokyo 135-8710 (JP)**
• **Osaka University**
**Suita-shi, Osaka 565-0871 (JP)**

(72) Inventors:
• **TOJIMA, Narifumi**
**Tokyo 135-8710 (JP)**
• **ISHIMOTO, Koshi**
**Tokyo 135-8710 (JP)**
• **HANDA, Norihisa**
**Tokyo 135-8710 (JP)**
• **KUWATA, Gen**
**Tokyo 135-8710 (JP)**
• **OHASHI, Satoru**
**Tokyo 135-8710 (JP)**
• **JIKUMARU, Takehiro**
**Tokyo 135-8710 (JP)**

• **HIRATA, Katsuhiro**
**Suita-shi**
**Osaka 565-0871 (JP)**
• **NIGUCHI, Noboru**
**Suita-shi**
**Osaka 565-0871 (JP)**
• **OSHIUMI, Tsubasa**
**Suita-shi**
**Osaka 565-0871 (JP)**

(74) Representative: **Carpmael, Robert Maurice Charles**
**Marks & Clerk LLP**
**15 Fetter Lane**
**London EC4A 1BW (GB)**

(56) References cited:
WO-A1-2008/065830    WO-A1-2008/113082
WO-A1-2009/087409    WO-A1-2009/087409
WO-A1-2013/011809    WO-A1-2013/011809
WO-A2-2013/003297    WO-A2-2013/003297
WO-A2-2013/186551    JP-A- 2002 262 496
JP-A- 2009 118 704    JP-U- H0 543 754
JP-U- H0 543 754    JP-U- S56 133 244
JP-U- S56 156 346    US-A1- 2007 085 441
US-A1- 2012 007 464    US-A1- 2012 007 464
US-A1- 2012 274 168

## Description

Technical Field

The present invention relates to an annular magnetic pole member and a magnetic wave gear device.

Priority is claimed on Japanese Patent Application No. 2014-049460, filed on March 12, 2014.

Background Art

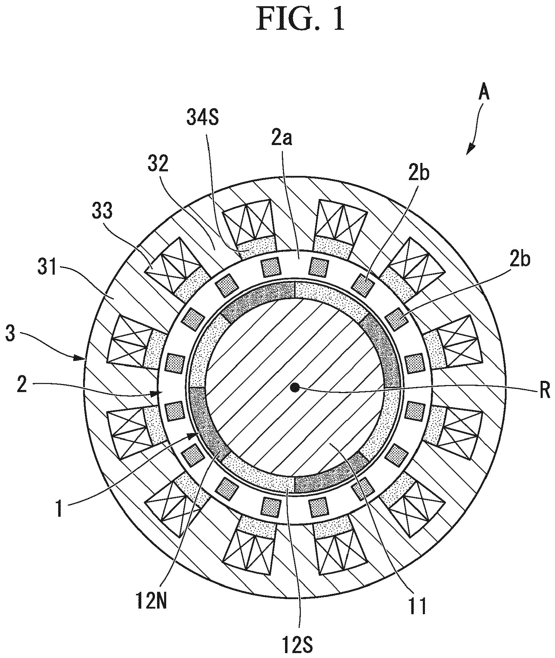

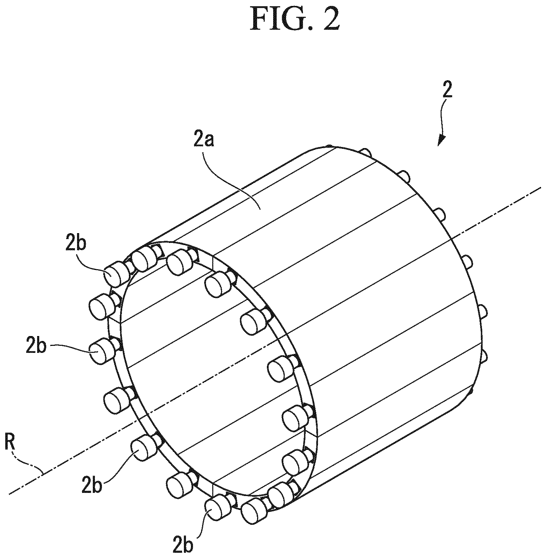

Patent Document 1 discloses a magnetic gear that includes a coil as a power source provided with a modulation magnetic pole including a plurality of magnetic pole pieces between a first permanent magnet field and a second permanent magnet field and modulates magnetic fields of the first permanent magnet field and the second permanent magnet field (refer to FIG. 1). The modulation magnetic pole in the magnetic gear is a toric member (annular magnetic pole member) including a non-magnetic bar between the plurality of magnetic pole pieces. A first end portion of the non-magnetic bar is connected to a first non-magnetic end portion holding member, and a second end portion of the non-magnetic bar is electrically insulated from a second non-magnetic end portion holding member (refer to FIG. 2). Such a magnetic gear is a form of a magnetic wave gear device.

Meanwhile, Patent Document 2 discloses a rotary-type magnetic gear (power transmission device) in which a plurality of magnetic pole pieces are disposed between a first rotor and a second rotor (refer to FIG. 1). The rotary-type magnetic gear is also a form of the magnetic wave gear device. The plurality of magnetic pole pieces in the rotary-type magnetic gear are the annular magnetic pole members which form a toric shape as a whole by disposing a non-magnetic material between the magnetic pole pieces formed of the magnetic material.

Citation List - Patent Document

> [Patent Document 1] Japanese Unexamined Patent Application, First Publication No. 2012-157205;
> [Patent Document 2] United States Patent Application, Publication No. 2011/0012458.

Other documents relating to improvements in such magnetic gear include US2007085441, WO2013186551, JPH0543754U, WO2013011809, WO2009087409, US2012007464, WO2013003297, US2012274168 and WO200811308 2. US2007085441 forms the basis of the preamble of claim 1 appended hereto.

Summary of Invention

Technical Problem

The modulation magnetic pole disclosed in Patent Document 1 is disposed between a first permanent magnet field and a second permanent magnet field in a state of being apart therefrom by a predetermined gap (minute gap), and the plurality of magnetic pole pieces disclosed in Patent Document 2 are disposed between a first rotor and a second rotor in a state of being apart therefrom by a minute gap in a similar manner to the modulation magnetic pole disclosed in Patent Document 1. The modulation magnetic pole and the plurality of magnetic pole pieces referenced above require mechanically firm structures, for example, in order to maintain the minute gap. Therefore, the shape and the structure of a holding structure (for example, the non-magnetic bar or the like in Patent Document 1) that holds the plurality of magnetic pole pieces are complicated. Therefore, for example, in a case of manufacturing a modulation magnetic pole or the like having a greater size, there is a possibility that assemblability thereof becomes poor.

The present invention has been made in consideration of the above-described circumstances, and an object thereof is to provide an annular magnetic pole member having a structure which is simpler and more excellent in assemblability than those in the related art, and the magnetic wave gear device using the annular magnetic pole member. Solution to Problem

The present invention is disclosed in claim 1. Further embodiments are disclosed in dependent claims 2, 3.

Effects of Invention

According to the present invention, it is possible to provide the annular magnetic pole member having a structure which is simpler and more excellent in assemblability than those in the related art, and the magnetic wave gear device using the annular magnetic pole member.

Brief Description of Drawings

> FIG. 1 is a cross-sectional view showing a configuration of a main portion of an electric motor (magnetic wave gear device) not according to an embodiment of the present invention.
> FIG. 2 is a perspective view showing an overall configuration of a low-speed rotor (annular magnetic pole member) not according to an embodiment of the present invention.
> FIG. 3A is a perspective view showing a configuration of a core portion and fastening bolts not according to an embodiment of the present invention.

FIG. 3B is a perspective view showing a configuration of the core portion and the fastening bolts not according to an embodiment of the present invention.

FIG. 4 is a front view showing a magnetic body piece not according to the present invention.

FIG. 5A is a front view showing a magnetic body piece not according to the present invention.

FIG. 5B is a front view showing a magnetic body piece according to the present invention.

FIG. 5C is a front view showing a magnetic body piece according to the present invention.

FIG. 5D is a front view showing a magnetic body piece not according to the the present invention.

FIG. 5E is a front view showing a magnetic body piece not according to the present invention.

FIG. 6 is a front view showing the magnetic body piece not according to the present invention.

Description of Embodiments

Hereinafter, with reference to the drawings, aspects of the present invention will be described.

FIG. 1 is a cross-sectional view showing a configuration of a main portion of an electric motor A (magnetic wave gear device). As shown in FIG. 1, the electric motor A (magnetic wave gear device) includes a high-speed rotor 1 (inner magnetic pole member) which is coaxially (concentrically) provided with respect to a rotary center axis R, a low-speed rotor 2 (annular magnetic pole member), and a stator 3 (outer magnetic pole member).

The high-speed rotor 1 is a columnar member provided on the inner side of the low-speed rotor 2, that is, provided closer to the rotary center axis R than the low-speed rotor 2 and corresponds to the inner magnetic pole member. The low-speed rotor 2 is a cylindrical member provided on the outer side of the high-speed rotor 1 (between the high-speed rotor 1 and the stator 3) and corresponds to the annular magnetic pole member. The stator 3 is a cylindrical member provided on the outer side of the low-speed rotor 2, which is, provided further away from the rotary center axis R than the low-speed rotor 2 and corresponds to the outer magnetic pole member.

The high-speed rotor 1, the low-speed rotor 2, and the stator 3 will be more specifically described. The high-speed rotor 1 includes a core 11 and a plurality of permanent magnets 12N and 12S. The core 11 is a magnetic member shaped from a magnetic body material so as to have a columnar shape (columnar magnetic member), and the shaft center of the core 11 coincides with the rotary center axis R. The plurality of permanent magnets 12N and 12S are disposed on the outer circumferential surface of the core 11 so as to face the inner surface of the low-speed rotor 2 and to be at regular intervals in the circumferential direction of the core 11.

Here, as shown in FIG. 1, the number of permanent magnets 12N and 12S (the number of poles) in the present example is eight (four pairs of poles). In other words, the pitch of the magnetic poles around the rotary center axis R of the high-speed rotor 1 in the present example is 45° (= 360°/8), when the pitches are expressed as angles. In addition, a number of pairs of poles Nh (the number of sets of N-pole and S-pole, that is, the number of sets of the permanent magnets 12N and 12S) of the high-speed rotor 1 is four.

In the permanent magnets 12N and 12S, surfaces of the four permanent magnets 12N in total facing the inner surface of the low-speed rotor 2 are the N-poles. In the same manner, surfaces of the four permanent magnet 12S in total facing the inner surface of the low-speed rotor 2 are the S-poles. In other words, the plurality of permanent magnets 12N and 12S are provided on the circumferential surface of the core 11 so as to be apart from each other at equal distances in a direction (radial direction) orthogonal to the rotary center axis R and to cause the N-poles and the S-poles to be alternately arranged in the circumferential direction of the high-speed rotor 1 orthogonal to the radial direction.

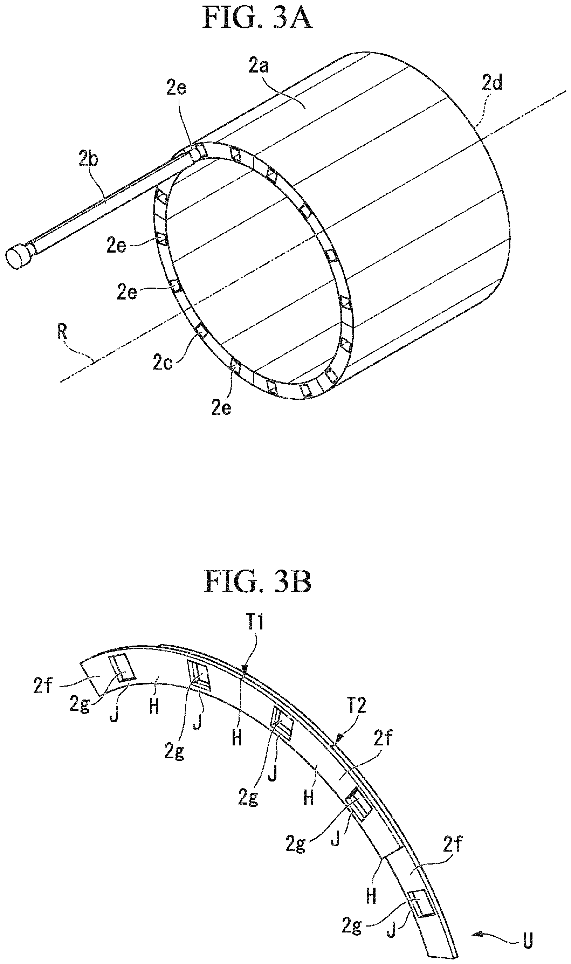

The low-speed rotor 2 is a cylindrical member having the rotary center axis R as the center axis. The low-speed rotor 2 is configured to be a laminated steel sheet which is obtained by laminating multiple known electromagnetic steel sheets as the magnetic material in a direction of the rotary center axis R. The low-speed rotor 2 will be described below in detail with reference to FIGS. 2, 3A, and 3B in addition to FIG. 1. Here, FIG. 2 is a perspective view showing an overall configuration of the low-speed rotor 2 (annular magnetic pole member). FIG. 3A is a perspective view showing a configuration of a core portion 2a and fastening bolts 2b. FIG. 3B is a perspective view showing a configuration of magnetic body pieces 2f and openings 2g of the core portion 2a.

As shown in FIG. 2, the low-speed rotor 2 includes the core portion 2a and a plurality of the fastening bolts 2b. As shown in FIGS. 2 and 3A, the core portion 2a is a cylindrical member which has the rotary center axis R as the shaft center and has a predetermined width in the radial direction. A plurality of penetration holes 2e penetrating the core portion 2a from a first end surface 2c to a second end surface 2d are formed in the circumferential direction at constant intervals (pitch of the penetration holes). The shape of the first end surface 2c and the shape of the second end surface 2d are exactly the same as each other, that is, the width of the core portion 2a in the radial direction is constant in the direction of the rotary center axis R.

The plurality of penetration holes 2e have rectangular shapes (for example, square shapes) in a front view and are exactly the same as each other in size. In addition, each penetration hole 2e is formed at an intermediate position of the width in the radial direction of the core portion 2a, that is, an intermediate position in the radial direction on the first end surface 2c (the second end surface 2d).

The plurality of fastening bolts 2b are rod-shaped members which are respectively inserted through the penetration holes 2e, are formed from non-magnetic materials, and have predetermined lengths. As shown in FIG. 3A, the shape of a cross-section of each fastening bolt 2b orthogonal to its axis line is a shape similar to the front shape (rectangular shape) of each penetration hole 2e and is formed to have a shape smaller that the size of the penetration hole 2e as much as a predetermined clearance. In other words, a gap between the fastening bolt 2b and the penetration hole 2e in a case where the fastening bolt 2b is inserted through the penetration hole 2e is minute, and most of the area of the penetration hole 2e is occupied by the fastening bolt 2b. A nut (not shown) is mounted at the tip of each fastening bolt 2b.

In other words, in the low-speed rotor 2 according to the present example, the fastening bolts 2b are respectively inserted into the penetration holes 2e of the cylindrical core portion 2a having a predetermined width (thickness) from the first end surface 2c of the core portion 2a, and the nuts are mounted at the tip portions of the fastening bolts 2b protruding from the second end surface 2d of the core portion 2a. The number of the penetration holes 2e in the present example, that is, the number of the fastening bolts 2b is sixteen, as shown in FIG. 2.

The core portion 2a will be described in more detail. As shown in FIGS. 3A and 3B, the core portion 2a is an aggregate of a plurality of magnetic body pieces 2f which are formed so as to have the same shape and formed of electromagnetic steel sheets. In other words, the core portion 2a is a laminated steel sheet obtained by laminating a plurality of units (single layer units) U arranged in a toric manner in the direction of the rotary center axis R so that a predetermined number of the magnetic body pieces 2f are in contact with each other around the rotary center axis R. Each magnetic body piece 2f is formed of the electromagnetic steel sheet of which the front surface and the rear surface are subjected to insulation processing.

As shown in FIG. 3A, each magnetic body piece 2f has a shape obtained by dividing the core portion 2a, of which the first end surface 2c (the second end surface 2d) has a ring shape with a predetermined width, into predetermined angles in the circumferential direction. The magnetic body piece 2f includes two openings 2g formed apart from each other by a certain distance (pitch of the openings = pitch of the penetration holes) in the circumferential direction. The openings 2g have rectangular shapes (for example, square shapes) in a front view in a manner similar to the penetration holes 2e configuring the above-described penetration holes 2e.

In the present example, sixteen penetration holes 2e are provided in total, and the number of the magnetic body pieces 2f (the number of divisions) in each single layer unit U is eight. In other words, in each single layer unit U, eight magnetic body pieces 2f are arranged around the rotary center axis R in a toric manner so as to be in contact with each other. The openings 2g in each magnetic body piece 2f configuring the single layer unit U are continuously connected to each other by overlapping each other in the direction of the rotary center axis R, thereby configuring the penetration holes 2e through the connection.

When the core portion 2a configured to be an aggregate of the magnetic body pieces 2f is viewed in the circumferential direction of the core portion 2a, portions J in each of which the opening 2g is present and portions H in each of which no opening 2g is present are alternately continued. In addition, the number of both the portions H and the portions J is sixteen. In addition, the portion H is a portion configured to be made of only the magnetic material, thereby being a portion having high magnetic permeability (high magnetic permeability portion). Meanwhile, even though the magnetic material is partially present, most of the portion J is the opening 2g and the fastening bolt 2b formed of the non-magnetic material is inserted through the openings 2g. Therefore, the portion J is a portion (low magnetic permeability portion) of which magnetic permeability is much lower than that of the high magnetic permeability portion H.

In addition, the single layer units U adjacent to each other in the direction of the rotary center axis R are laminated so that the contact positions of the magnetic body pieces 2f deviate as much as the pitch of the openings (as much as the pitch of the penetration holes) in the circumferential direction. In other words, as shown in FIG. 3B, a contact position T1 of the magnetic body pieces 2f in a certain single layer unit U is not the same position as a contact position T2 of the magnetic body pieces 2f in the adjacent single layer unit U and is displaced as much as half the width of the magnetic body piece 2f in the circumferential direction. Due to the displacement, in a case where the fastening bolt 2b is inserted through each penetration hole 2e (that is, each opening 2g) in the core portion 2a and the nut is mounted at the tip portion, the magnetic body pieces 2f configuring each single layer unit U are fastened as a whole, thereby being integrated.

In other words, the low-speed rotor 2 according to the present example is a magnetic member in which the number of magnetic poles N1 is sixteen, that is, sixteen portions H of the low-speed rotor 2 in total serve as the magnetic poles. Therefore, the pitch of the magnetic poles of the low-speed rotor 2 around the rotary center axis R is 22.5° (= 360°/16) when the pitches are expressed as angles.

As shown in FIG. 1, the stator 3 is a cylindrical member which has the rotary center axis R as the shaft center and is disposed outside of the low-speed rotor 2. The stator 3 includes a yoke 31, a plurality of polar teeth 32, a plurality of coils 33, and a plurality of permanent magnets 34S. As shown in FIG. 1, the stator 3 according to the present example includes twelve polar teeth 32, twelve coils 33, and twelve permanent magnets 34S in total.

The yoke 31 is a cylindrical member which is formed of the magnetic material and is positioned on the outermost circumference of the stator 3. The polar teeth 32 are integrally formed with the yoke 31 and protrude from the yoke 31 to the inner side in the radial direction, that is, toward the low-speed rotor 2. The plurality of polar teeth 32 are disposed around the rotary center axis R at regular intervals. The coils 33 are wound around each polar tooth 32 by utilizing a slot opening portion (slot) which is formed between the adjacent polar teeth 32. A three-phase alternating current is supplied as a drive current from an external drive device (for example, inverter) to each coil 33.

As shown in FIG. 1, each permanent magnet 34S is disposed so as to face the low-speed rotor 2 in the slot opening portion. In other words, no permanent magnets 34S are provided at the tip of each polar tooth 32 in a state of facing the low-speed rotor 2 but permanent magnets 34S are provided between the polar teeth 32, thereby facing the outer circumferential surface of the low-speed rotor 2 with a minute gap therebetween. The polarities of the permanent magnets 34S on a side facing the low-speed rotor 2 are the same as each other, for example, the S-poles. The polarities of the permanent magnets 34S may be the N-poles as long as the polarities are the same as each other in a direction of the minute gap with respect to the low-speed rotor 2.

Here, each permanent magnet 34S plays a role in assisting the magnetic field generated in each polar tooth 32 by each coil 33 and is provided as necessary. The number of the slot opening portions (hereinafter, will be referred to as the number of slots) of the stator 3 in the present example is determined based on the number of the polar teeth 32, that is, the number of slots is twelve. In addition, the number of pairs of poles (the number of sets of the N-pole and the S-pole, that is, the number of sets of the polar tooth 32 and the permanent magnet 34S) of the stator 3 in the present example is twelve as well.

The electric motor A including the high-speed rotor 1, the low-speed rotor 2, and the stator 3 described above is configured to satisfy the following relational expression (2) regarding the number of pairs of poles Nh of the high-speed rotor 1, the number of magnetic poles Nl of the low-speed rotor 2, the number of slots Ns of the stator 3.

$$Ns = Nl \pm Nh \quad (2)$$

As described above, in a case where the polarity of each permanent magnet 34S on a side facing the low-speed rotor 2 is set as the S-pole, among the permanent magnets 12N and 12S in the high-speed rotor 1, the permanent magnets 12N in which the polarities on the surface facing the inner surface of the low-speed rotor 2 are the N-poles or the permanent magnets 12S in which the polarities on the surface facing the inner surface of the low-speed rotor 2 are the S-poles may be deleted as necessary. In this case, the high-speed rotor 1 has only the permanent magnets 12N disposed on the outer circumference at predetermined intervals. Therefore, the above-mentioned reference sign "Nh" becomes the number of magnetic poles instead of the number of pairs of poles. Meanwhile, in a case where the polarity of each permanent magnet 34S on a side facing the low-speed rotor 2 is set to the N-pole, among the permanent magnets 12N and 12S in the high-speed rotor 1, the permanent magnets 12N in which the polarities on the surface facing the inner surface of the low-speed rotor 2 are the N-poles or the permanent magnets 12S in which the polarities on the surface facing the inner surface of the low-speed rotor 2 are the S-poles may be deleted.

Subsequently, an operation of the electric motor A having the above-described configuration will be simply described.

The operation principle of the electric motor A is described in the related art document (Japanese Unexamined Patent Application, First Publication No.2010-106940) in detail so that detailed description thereof will be omitted herein. However, in the electric motor A according to the present example, the above-referenced relational expression (2) is satisfied, the high-speed rotor 1 and the low-speed rotor 2 individually rotate based on a rotational speed ratio Gr indicated by the following expression (3).

$$Gr = Nl / Nh \quad (3)$$

In other words, in the electric motor A according to the present example, the magnetic field of four pairs of poles generated by the high-speed rotor 1 and the magnetic field of twelve slots generated by the stator 3 are modulated by the low-speed rotor 2 including the plurality of magnetic poles (sixteen poles in total). Therefore, the high-speed rotor 1 and the low-speed rotor 2 rotate at different rotational speeds with respect to the stator 3 which is a static system.

Here, each magnetic pole of the low-speed rotor 2, that is, the portions H of each magnetic body piece 2f configuring the core portion 2a of the low-speed rotor 2 as described above is interposed between the portions J of which the magnetic permeability is remarkably low. In addition, in each magnetic body piece 2f of the core portion 2a, since each opening 2g has a rectangular shape, the magnetic permeability at the boundary between the portion H and the portion J changes rapidly, thereby exhibiting a rapid change in the magnetic permeability close to that in a case where the non-magnetic material is disposed between the magnetic material pieces such as the low-speed rotors in the related art. Therefore, the magnetic performance of the low-speed rotor 2 according to the present example is substantially equal to those of the low-speed rotors in the related art.

Meanwhile, in the low-speed rotor 2 according to the present example, the openings 2g formed in the plurality of magnetic body pieces 2f are continuously connected to each other in the direction of the rotary center axis R, thereby configuring the penetration holes 2e. In addition, the fastening bolts 2b formed of the non-magnetic material are respectively inserted through the penetration holes 2e. Therefore, the magnetic body pieces 2f are configured to maintain a toric shape as a whole. Accordingly, each magnetic body piece 2f is configured to have a magnetic pole array in which the openings 2g and the fastening bolts 2b are annularly arranged at a predetermined pitch (22.5°) of the magnetic poles.

In other words, in the low-speed rotor 2 according to the present example, the single layer units U are configured by disposing the magnetic body pieces 2f in each of which the openings 2g are formed, in a toric manner, and the single layer units U are laminated in the direction of the rotary center axis R so that the contact positions of the magnetic body pieces 2f between the single layer units U adjacent to each other are different from each other. Accordingly, the plurality of magnetic body pieces 2f can have a firm cylindrical shape as a whole by respectively inserting the fastening bolts 2b through the penetration holes 2e formed with the openings 2g in each of the layers which are continuously connected to each other.

According to the low-speed rotor 2 in the present example, since the openings 2g of each magnetic body piece 2f are used for both forming the magnetic poles and forming the penetration holes 2e (bolt fastening hole), the structure is simpler than those of the low-speed rotors in the related art. Therefore, according to the low-speed rotor 2 in the present example, assemblability is further improved than that in the related art. Particularly, in a case of manufacturing a large-sized low-speed rotor 2, the structure for supporting the magnetic body pieces 2f (support structure) is simple. Thus, it is easier to manufacture the low-speed rotor 2 than those in the related art.

(1) In the above-described example, description is given regarding a case where the magnetic wave gear device is applied to the electric motor A. However, the present invention is not limited thereto. The present invention (magnetic wave gear device) may be applied to a generator. In addition, any one of the annular magnetic pole member and the inner magnetic pole member may be set as an input-side gear, and the other one of the annular magnetic pole member and the inner magnetic pole member may be set as an output-side gear, thereby being applied to a speed-increasing gear or a speed-reduction gear which transmits power.

(2) In the above-described example, the low-speed rotor 2 (annular magnetic pole member) having sixteen poles (N1 = 16) is employed. However, the present invention is not limited thereto. The number of magnetic poles N1 of the annular magnetic pole member may be appropriately set in accordance with the rotational speed ratio Gr which is intended to be acquired. In addition, the number of pairs of poles Nh of the high-speed rotor 1 (inner magnetic pole member) and the number of slots Ns of the stator 3 (outer magnetic pole member) may be also appropriately set as necessary.

(3) In the low-speed rotor 2 according to the above-described example, the single layer unit U including eighteen magnetic body pieces 2f in total is employed. However, the present invention is not limited thereto. The number of the magnetic body pieces 2f configuring the single layer unit U may be appropriately set in accordance with the size and the like of the low-speed rotor 2.

(4) In each magnetic body piece 2f according to the above-described example, two openings 2g are formed at the intermediate positions of the width of the core portion 2a (that is, the magnetic body piece 2f) in the radial direction. However, the present invention is not limited thereto.

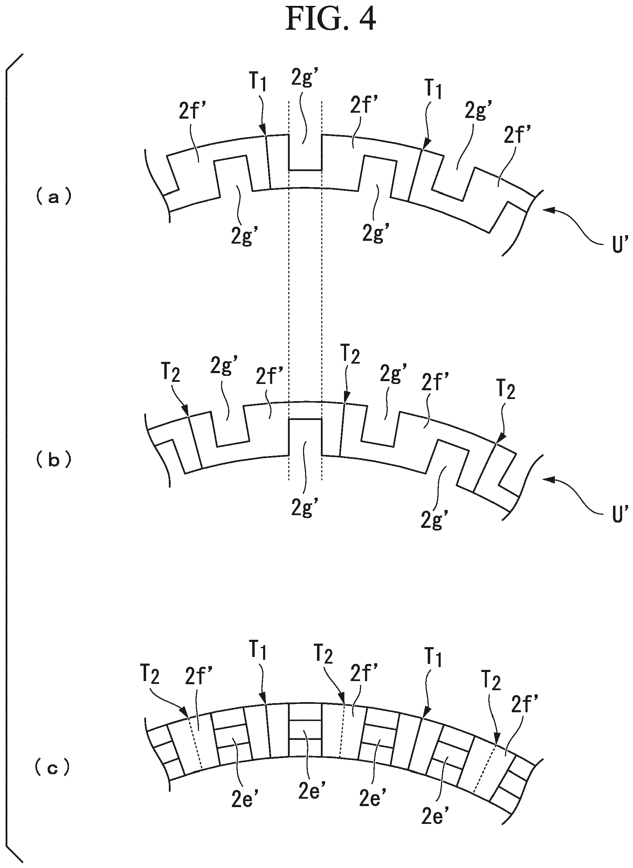

FIG. 4 is a front view showing a magnetic body piece 2f', according to a first modification still not in accordance with the present invention. As shown in (a) of FIG. 4 and (b) of FIG. 4, one of two openings 2g may be displaced from the above-referenced intermediate position to the outside (stator 3 side), and the other one of the two openings 2g may be displaced from the above-referenced intermediate position to the inner side (high-speed rotor 1 side). In other words, the two openings 2g may be disposed in a state of deviating from each other in the radial direction of the core portion 2a. In a case of employing the magnetic body piece 2f including such openings 2g', as shown in (c) of FIG. 4, penetration holes 2e' narrower in the radial direction than the penetration holes 2e of the above-described example are formed when single layer units U' are laminated.

(5) In each magnetic body piece 2f according to the above-described example, the rectangular openings 2g are employed in order to rapidly change the magnetic permeability at the boundary between the portion H and the portion J. However, the present invention is not limited thereto.

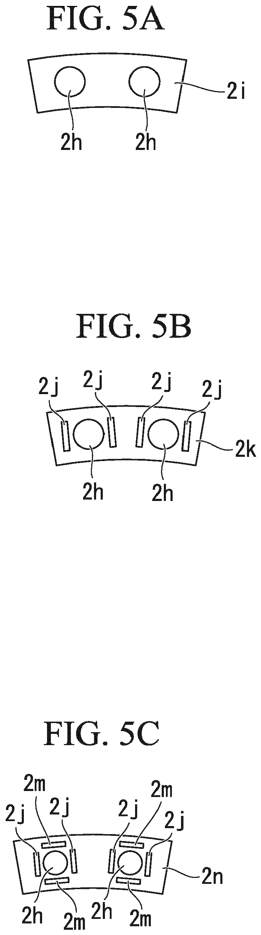

FIG. 5A is a front view showing a magnetic body piece 2i according to a second modification, still not in accordance with the present invention.

FIG. 5B, however, is a front view showing a magnetic body piece 2k according to the present invention.

FIG. 5C is a front view showing a magnetic body piece 2n according to a modification, again in accordance with the present invention.

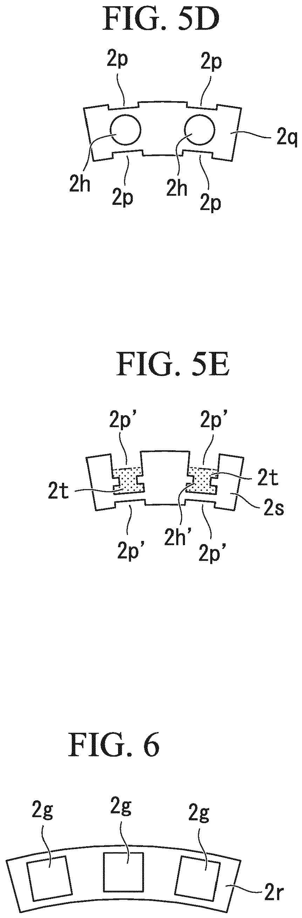

FIG. 5D is a front view showing a magnetic body piece 2q not according to the present invention.

FIG. 5E is a front view showing a magnetic body piece 2s not according to the present invention.

In accordance with the invention, in place of the square openings 2g, as shown in FIG. 4, the magnetic body piece 2i includes round (perfectly circular) openings 2h as shown in Figures 5B and 5C. In this case, the cross-sectional shape of the fastening bolt 2b also becomes round (perfect circle). Thus, it is easy to manufacture the fastening bolt 2b.

(6) In addition, in a case of employing such round (perfectly circular) openings 2h, the magnetic permeability at the boundary between the portion H and the portion J gently changes. Therefore, in order to supplement the gentle change, as shown in FIG. 5B, the magnetic body pieces 2k including long holes 2j extending in the radial direction on both sides in the circumferential direction are employed.

(7) In addition, in order to change the magnetic permeability more rapidly, as shown in FIG. 5C, in addition to the long holes 2j, the magnetic body piece 2n including long holes 2m extending in the circumferential direction on both sides in the radial direction may be employed.

(8) As shown in FIG. 5D, which is not in accordance with the present invention, the amount of the magnetic material at the openings 2h in the radial direction might be reduced by employing the magnetic body piece 2q provided with recess portions 2p on both sides in the radial direction of round (perfectly circular) openings 2h, in place of the long holes 2j and 2m, so that the magnetic permeability changes more rapidly.

(9) Moreover, as with the modification of the magnetic body piece 2q, the magnetic body piece 2s shown in FIG. 5E may be employed, albeit not in accordance with the present invention: in place of the round (perfectly circular) openings 2h, the magnetic body piece 2s may include openings 2h' which are open to the outer circumferential side (upper side) and have shapes in which a protrusion protrudes from each of the right and left sides. In addition, in place of the fastening bolt 2b of which the cross-sectional shape is round (perfect circle), a fastening bolt 2t of which a cross-sectional shape is an H-type may be inserted so that recess portions 2p' are formed on both sides in the radial direction.

In the magnetic body piece 2q shown in FIG. 5D, circulation paths for magnetic flux are formed around the round (perfectly circular) openings 2h. However, in the magnetic body piece 2s shown in FIG. 5E, no circulation path for magnetic flux is formed. Accordingly, leakage of the magnetic flux can be reduced. Therefore, the magnetic performance of the low-speed rotor 2 (annular magnetic pole member) can be improved. In addition, since the fastening bolt 2t of which a cross-sectional shape is an H-type meshes with the recess portion of the magnetic body piece 2s in which the protrusions respectively protrude from the right and left sides, twist strength of the low-speed rotor 2 (annular magnetic pole member) can be improved.

(10) In the above-described examples and modifications of Figures 1 to 5, magnetic body pieces 2f respectively including two openings 2g, two openings 2g', and two openings 2h are employed. However, the present invention is not limited to that number of openings. The numbers of the openings may be three or more. FIG. 6 is a front view showing a magnetic body piece 2r, according to a modification including three openings 2g as an example, albeit not one according to the present invention.

Industrial Applicability

According to the present invention, it is possible to provide an annular magnetic pole member having a structure which is simpler and more excellent in assemblability than those in the related art, and a magnetic wave gear device using the annular magnetic pole member.

Reference Signs List

| | |
|---|---|
| A | ELECTRIC MOTOR (MAGNETIC WAVE GEAR DEVICE) |
| R | ROTARY CENTER AXIS |
| H | HIGH MAGNETIC PERMEABILITY PORTION (MAGNETIC POLE) |
| J | LOW MAGNETIC PERMEABILITY PORTION |
| 1 | HIGH-SPEED ROTOR (INNER MAGNETIC POLE MEMBER) |
| 11 | CORE |
| 12N, 12S | PERMANENT MAGNET |
| 2 | LOW-SPEED ROTOR (ANNULAR MAGNETIC POLE MEMBER) |
| 2a | CORE PORTION |
| 2b | FASTENING BOLT |
| 2c | FIRST END SURFACE |
| 2d | SECOND END SURFACE |
| 2e | PENETRATION HOLE |
| 2f | MAGNETIC BODY PIECE |
| 2g | OPENING |
| 3 | STATOR (OUTER MAGNETIC POLE MEMBER) |
| 31 | YOKE |
| 32 | POLAR TOOTH |
| 33 | COIL |
| 34S | PERMANENT MAGNET |

Claims

1. An annular magnetic pole member (2) comprising:

a core portion (2a) including a plurality of single layer units (U) laminated in a direction of a center axis (R), each of the single layer units (U) including a plurality of magnetic body pieces (2f) annularly arranged around the center axis (R) in a state where the magnetic body pieces (2f) are in contact with each other, and each of the magnetic body pieces (2f) including a plurality of openings (2g); and
a plurality of fastening bolts (2b) that are respectively inserted through a plurality of penetration holes (2e) which are the plurality of openings (2g) continuously connected to each other in the direction of the center axis (R);
wherein in the single layer units (U) adjacent to each other, contact positions of the magnetic body pieces (2f) are different from each other, and
the plurality of openings (2g) are round holes (2h),
**characterized in that** a rectangular hole (2j) extending in a radial direction of the core portion (2a) is provided on each of both sides of each round hole (2h) in a circumferential direction of the core portion (2a), and
**in that** a rectangular hole (2m) extending in the circumferential direction is provided on each of both sides of each round hole (2h) in the radial direction.

2.  The annular magnetic pole member (2) according to Claim 1, wherein in the magnetic body pieces (2f), the plurality of openings (2g) are deviated in the radial direction of the core portion (2a).

3.  A magnetic wave gear device (A) comprising:

    the annular magnetic pole member (2) according to Claim 1 or Claim 2;
    an inner magnetic pole member (1) that is provided on an inner side of the annular magnetic pole member (2), is provided concentrically with respect to the annular magnetic pole member (2), and has a plurality of magnetic poles (H); and
    an outer magnetic pole member (3) that is provided on an outer side of the annular magnetic pole member (2), is provided concentrically with respect to the annular magnetic pole member (2), and has a plurality of slots;
    wherein the following relational expression #1 is established among a number of pairs of poles Nh of the inner magnetic pole member (1), a number of magnetic poles Nl of the annular magnetic pole member (2), and a number of slots Ns of the outer magnetic pole member (3):

$$Ns = Nl \pm Nh \quad \#1.$$

**Patentansprüche**

1.  Ringförmiges Magnetpolelement (2), das Folgendes umfasst:

    einen Kernabschnitt (2a), der eine Mehrzahl von Einzellageneinheiten (U) einschließt, die in einer Richtung einer Mittelachse (R) geschichtet sind, wobei jede der Einzellageneinheiten (U) eine Mehrzahl von Magnetkörperteilen (2f) einschließt, die in einem Zustand, in dem die Magnetkörperteile (2f) in Berührung miteinander stehen, ringförmig um die Mittelachse (R) angeordnet sind, und wobei jedes der Magnetkörperteile (2f) eine Mehrzahl von Öffnungen (2g) einschließt, und
    eine Mehrzahl von Befestigungsbolzen (2b), die jeweils durch eine Mehrzahl von Durchdringungslöchern (2e) eingesetzt sind, welche die eine Mehrzahl von Öffnungen (2g) sind, die durchgehend in der Richtung der Mittelachse (R) miteinander verbunden sind,
    wobei in den Einzellageneinheiten (U), die einander benachbart sind, Berührungspositionen der Magnetkörperteile (2f) sich voneinander unterscheiden und
    die eine Mehrzahl von Öffnungen (2g) runde Löcher (2h) sind,
    **dadurch gekennzeichnet, dass** ein rechteckiges Loch (2j), das sich in einer radialen Richtung des Kernabschnitts (2a) erstreckt, auf jeder der beiden Seiten jedes runden Lochs (2h) in einer Umfangsrichtung des Kernabschnitts (2a) bereitgestellt wird und
    dadurch, dass ein rechteckiges Loch (2m), das sich in der Umfangsrichtung erstreckt, auf jeder der beiden Seiten jedes runden Lochs (2h) in der radialen Richtung bereitgestellt wird.

2.  Ringförmiges Magnetpolelement (2) nach Anspruch 1, wobei in den Magnetkörperteilen (2f) die eine Mehrzahl von Öffnungen (2g) in der radialen Richtung des Kernabschnitts (2a) abgelenkt sind.

3.  Magnetwellengetriebe-Vorrichtung (A), die Folgendes umfasst:

    das ringförmige Magnetpolelement (2) nach Anspruch 1 oder Anspruch 2,
    ein inneres Magnetpolelement (1), das auf einer inneren Seite des ringförmigen Magnetpolelements (2) bereitgestellt wird, konzentrisch in Bezug auf das ringförmiges Magnetpolelement (2) bereitgestellt wird und eine Mehrzahl von Magnetpolen (H) aufweist, und
    ein äußeres Magnetpolelement (3), das auf einer äußeren Seite des ringförmigen Magnetpolelements (2) bereitgestellt wird, konzentrisch in Bezug auf das ringförmiges Magnetpolelement (2) bereitgestellt wird und eine Mehrzahl von Schlitzen aufweist,

wobei der folgende Vergleichsausdruck #1 zwischen einer Anzahl von Paaren von Polen Nh des inneren Magnetpolelements (1), einer Anzahl von Magnetpolen N1 des ringförmigen Magnetpolelements (2) und einer Anzahl von Schlitzen Ns des äußeren Magnetpolelements (3) festgelegt ist:

$$Ns = Nl \pm Nh \qquad \#1.$$

## Revendications

1. Élément annulaire à pôles magnétiques (2) comprenant :

   une partie de noyau (2a) incluant une pluralité d'unités monocouche (U) laminées dans une direction d'un axe central (R), chacune des unités monocouche (U) incluant une pluralité de morceaux de corps magnétiques (2f) agencés de façon annulaire autour de l'axe central (R) dans un état où les morceaux de corps magnétiques (2f) sont en contact les uns avec les autres, et chacun des morceaux de corps magnétiques (2f) incluant une pluralité d'orifices (2g), et
   une pluralité de boulons de fixation (2b) qui sont respectivement insérés à travers une pluralité de trous de pénétration (2e) qui sont la pluralité d'orifices (2g) connectés les uns aux autres de façon continue dans la direction de l'axe central (R),
   dans lequel, dans les unités monocouche (U) adjacentes les unes avec les autres, des positions de contact des morceaux de corps magnétiques (2f) sont différentes les unes avec les autres, et
   la pluralité des orifices (2g) sont des trous ronds (2h),
   **caractérisé en ce qu'**un trou rectangulaire (2j) s'étendant dans une direction radiale de la partie de noyau (2a) est agencé sur chacun des deux côtés de chaque trou rond (2h) dans une direction circonférentielle de la partie de noyau (2a), et
   **en ce qu'**un trou rectangulaire (2m) s'étendant dans la direction circonférentielle est agencé sur chacun des deux côtés de chaque trou rond (2h) dans la direction radiale.

2. Élément annulaire à pôles magnétiques (2) selon la revendication 1, dans lequel, dans les morceaux de corps magnétiques (2f), la pluralité des orifices (2g) sont déviés dans la direction radiale de la partie de noyau (2a).

3. Dispositif d'engrenage à onde magnétique (A) comprenant :

   l'élément annulaire à pôles magnétiques (2) selon la revendication 1 ou 2,
   un élément intérieur à pôles magnétiques (1) qui est agencé sur un côté intérieur de l'élément annulaire à pôles magnétiques (2), est agencé concentriquement par rapport à l'élément annulaire à pôles magnétiques (2), et comporte une pluralité de pôles magnétiques (H), et
   un élément extérieur à pôles magnétiques (3) qui est agencé sur un côté extérieur de l'élément annulaire à pôles magnétiques (2), est agencé concentriquement par rapport à l'élément annulaire à pôles magnétiques (2) et comporte une pluralité de fentes,
   dans lequel l'expression relationnelle suivante #1 est définie entre un nombre de paires de pôles Nh de l'élément intérieur à pôles magnétiques (1), un nombre de pôles magnétiques NI de l'élément annulaire à pôles magnétiques (2) et un nombre de fentes Ns de l'élément extérieur à pôles magnétiques (3) :

$$Ns = Nl \pm Nh \quad \#1.$$

# FIG. 1

FIG. 2

# FIG. 3A

# FIG. 3B

# FIG. 4

(a)

$2f'$  $T_1$  $2g'$  $2f'$  $T_1$  $2g'$  $2f'$

$2g'$  $2g'$  $U'$

(b)

$T_2$  $2g'$  $2f'$  $T_2$  $2g'$  $2f'$  $T_2$

$2g'$  $2g'$  $U'$

(c)

$T_2$  $2f'$  $T_1$  $T_2$  $2f'$  $T_1$  $T_2$  $2f'$

$2e'$  $2e'$  $2e'$  $2e'$

# FIG. 5A

# FIG. 5B

# FIG. 5C

# FIG. 5D

2p  2p

2q

2h  2p  2h  2p

# FIG. 5E

2p'  2p'

2t  2t  2s

2p'  2h'  2p'

# FIG. 6

2g  2g  2g

2r

**EP 3 118 972 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014049460 A
- JP 2012157205 A
- US 20110012458 A
- US 2007085441 A
- WO 2013186551 A
- JP H0543754 U
- WO 2013011809 A

- WO 2009087409 A
- US 2012007464 A
- WO 2013003297 A
- US 2012274168 A
- WO 2008113082 A
- JP 2010106940 A